# EUROPÄISCHE PATENTSCHRIFT

(11) **EP 1 145 891 B1**
(45) Veröffentlichungstag und Bekanntmachung des Hinweises auf die Patenterteilung: **02.11.2005**
(21) Anmeldenummer: 01108994.3
(22) Anmeldetag: 11.04.2001
(51) Int. Cl.: B60K 15/07, B62D 33/077

(54) **Gas- oder Trolleybus**
Gas or trolleybus
Omnibus à gaz ou trolleybus

(30) Priorität: 13.04.2000 AT 6392000
(43) Veröffentlichungstag der Anmeldung: 17.10.2001
(73) Patentinhaber: MAN Nutzfahrzeuge Aktiengesellschaft, 80995 München (DE)
(72) Erfinder: Vana, Christian, Dipl.-Ing., 1030 Wien (AT)

(56) Entgegenhaltungen:
- US-A- 5 380 042
- US-A- 5 501 289
- US-A- 5 673 940
- PATENT ABSTRACTS OF JAPAN Bd. 1996, Nr. 10, 31. Oktober 1996 (1996-10-31) -& JP 08 164751 A (NISSAN MOTOR CO LTD), 25. Juni 1996 (1996-06-25)

## Beschreibung

Die Erfindung betrifft einen gasbetriebenen Omnibus, mit unterflurig in ihm angeordneten Gasbehältern und mit einem Fahrgestell, dessen Rahmen als tragende Organe zwei Längsträger und des Weiteren Querspanten aufweist.

Bei gasbetriebenen Omnibussen ist es üblich, die Gasdruckflaschen und zugehörigen Steuer-, Regel- oder sonstigen Geräte auf dem Omnibus-Dach anzubringen, siehe z. B. die DE 3743804 A1. Aus der Beschreibungseinleitung dieser Schrift geht aber auch schon hervor, dass bei älteren Fahrzeugen die Gasdruckbehälter unterflurig angebracht wurden. Diese Unterfluranordnung wird dort aber aus verschiedenen Gründen als nachteilig dargestellt.

Es ist daher Aufgabe der Erfindung, bei einem gasbetriebenen Omnibus eine lage- und betriebssichere unterflurige Unterbringung für die Gasbehälter zu schaffen.

Diese Aufgabe ist erfindungsgemäß durch einen Unterflureinbaumodul mit den im Kennzeichen des Anspruchs 1 angegebenen Merkmalen gelöst.

Vorteilhafte Ausgestaltungen und Weiterbildungen dieser Lösung sind in den Unteransprüchen angegeben, auf deren wörtliche Zitierung an dieser Stelle verzichtet ist, da sich deren Merkmale alle auf entsprechende Angaben in der Figurenbeschreibung stützen.

Die erfindungsgemäße Lösung weist eine Reihe von Vorteilen auf. Der Unterflureinbaumodul bildet ein modulares Baukastensystem, das es erstmalig ermöglicht, für gasbetriebene Omnibusse eine vorgefertigte, betriebsfertige und auf Funktionstüchtigkeit überprüfte Anlage für die Kraftstoffversorgung der Gasmotoren zur Verfügung zu stellen. Dabei zeichnet sich der erfindungsgemäße Unterflureinbaumodul besonders dadurch aus, dass es mit ihm möglich ist, die Gaskessel aus den von der einschlägigen Industrie angebotenen Gaskesselfamilien (ein Durchmesser, verschiedene Längen) auszuwählen und praktisch jeder fahrzeugspezifischen Einbausituation, z. B. Lage und Abstände der Fahrgestell-Querspanten anzupassen. Für gasbetriebene Omnibusse kann somit ein vorbereitetes Traggestell mit maßgeschneiderter und betriebsfertiger Gasanlage zu einem Unterflureinbaumodul zusammengestellt werden, der vor Ort beim Anbau nur noch unter den Fahrgestell-Rahmen gehängt und dort angeschlossen wird. Die Gaskessel tauchen dabei in den Freiraum zwischen den Querspanten des Fahrgestells ein. Die Gasleitungen sind im Bereich der Längsholme bzw. über entsprechende Durchbrüche durch diese hindurch verlegt, wodurch deren Kollision mit dem Fahrgestellrahmen beim Anbau des Unterflureinbaumoduls vermeidbar ist. Der Unterflureinbaumodul ist außerdem aufgrund seiner Universalität auch für die Aufnahme von Behältern für praktisch alle im Fahrzeug erforderlichen Betriebsmittel wie CNG (compressed natural gas), LPG (liquid petrol gas), Druckluft, Hydrauliköl, Wasserstoff etc und zugehöriger Steuer-, Regel- und/oder Füllgeräte geeignet.

An dieser Stelle sei noch erwähnt, dass es aus der US-A-5380042 bekannt ist, bei einem mit flüssigem Otto- oder Dieselkraftstoff betriebenen Fahrzeug, insbesondere Schulbus, den Flüssigkraftstofftank in ein Traggestell einzubauen und zusammen mit diesem von unten her an den Rahmen anzubauen, wobei der Flüssigkraftstofftank zwischen den Fahrgestellrahmenlängsträgern zu liegen kommt und durch das Traggestell hinreichend crashgesichert ist.

Nachstehend ist die erfindungsgemäße Lösung anhand zweier in der Zeichnung dargestellter Ausführungsbeispiele noch näher erläutert. In der Zeichnung zeigen:
- Fig. 1: in perspektivischer Ansicht und Explosionsdarstellung die Teile eines Unterflureinbaumoduls für einen mit LPG betriebenen Omnibus,
- Fig. 2: einen Querschnitt durch den Unterflureinbaumodul gemäß Fig. 1 nach seinem Zusammenbau,
- Fig. 3: eine Vorderansicht des Unterflureinbaumoduls von Fig. 1 und 2 nach seinem Anbau am Fahrgestell des gasbetriebenen Omnibusses,
- Fig. 4: eine Vorderansicht eines Unterflureinbaumoduls mit anderem Traggestell für Anbau am Fahrgestell eines gasbetriebenen Omnibusses mit höheren Rahmen-Längsträgern.

In den Figuren ist von einem gasbetriebenen Omnibus nur ein Teil des Fahrgestells ersichtlich. Dessen Rahmen 1 weist als tragende Organe zwei Längsträger 2, 3 und des weiteren Querspanten 4, 5 auf. Es handelt sich mithin bei der Gattung von Omnibussen, bei denen die Erfindung zur Anwendung kommt, um sogenannte Chassisbusse.

Die Erfindung besteht in einem Unterflureinbaumodul 6, der ein Traggestell 7 aufweist, das aus zwei Längsholmen 8, 9 und wenigstens zwei mit den Längsholmen 8, 9 verbundenen Querholmen 10 zusammengesetzt ist. Das Traggestell 7 bildet eine vorgefertigte Grundeinheit, auf dessen Querholmen 10 und dort angeordneten Konsolen 11 Gasbehälter 12 oder sonstige Behälter und/oder Geräte 13 abgestützt und z. B. mittels Spannbändern 14 und/oder Schraubverbindungen befestigt werden. Nach dieser Behälter- und Gerätemontage einschließlich Anschlussorganen und Leitungen wird die Funktionstüchtigkeit dieser Anbauteile überprüft. Anschließend steht ein einbaufertiger Unterflureinbaumodul 6 zur weiteren Verwendung - Lagerhaltung oder unmittelbarem Anbau am Omnibus - zur Verfügung. Dieser Unterflureinbaumodul 6 ist erfindungsgemäß als komplett vormontierte Einheit von unten her am Fahrgestell-Rahmen des Fahrzeugs anbaubar.

Nachstehend ist auf Einzelheiten des erfindungsgemäßen Unterflureinbaumoduls 6 näher eingegangen.

Die Längsholme 8, 9 und Querholme 10 des Traggestells 7 haben einen U-förmigen oder anderen zweckmäßigen Querschnitt, z. B. rechteckigen Rohr-Querschnitt, und sind von entsprechenden Profilhalbzeugstangen abgelängt und behalten ihre gerade Form.

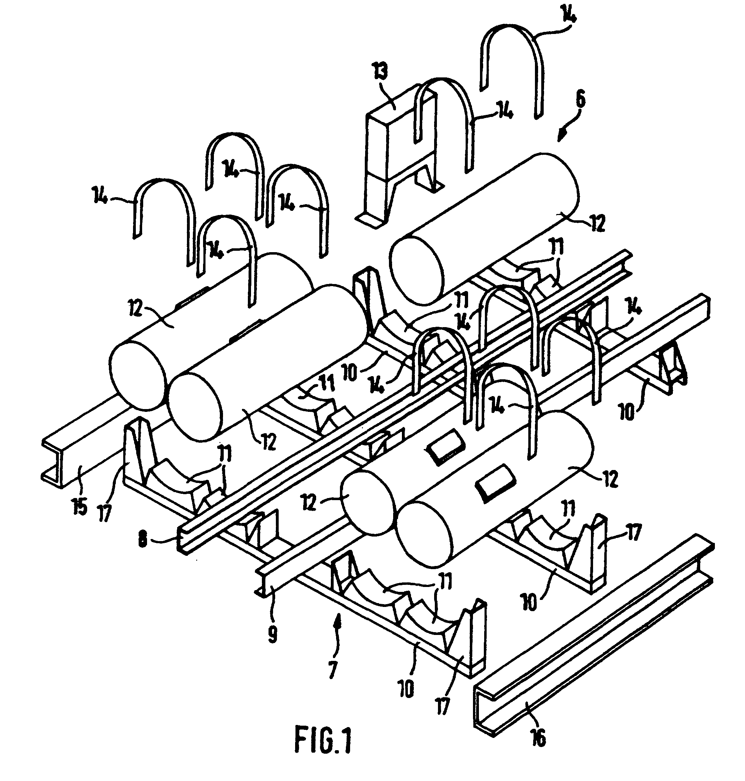

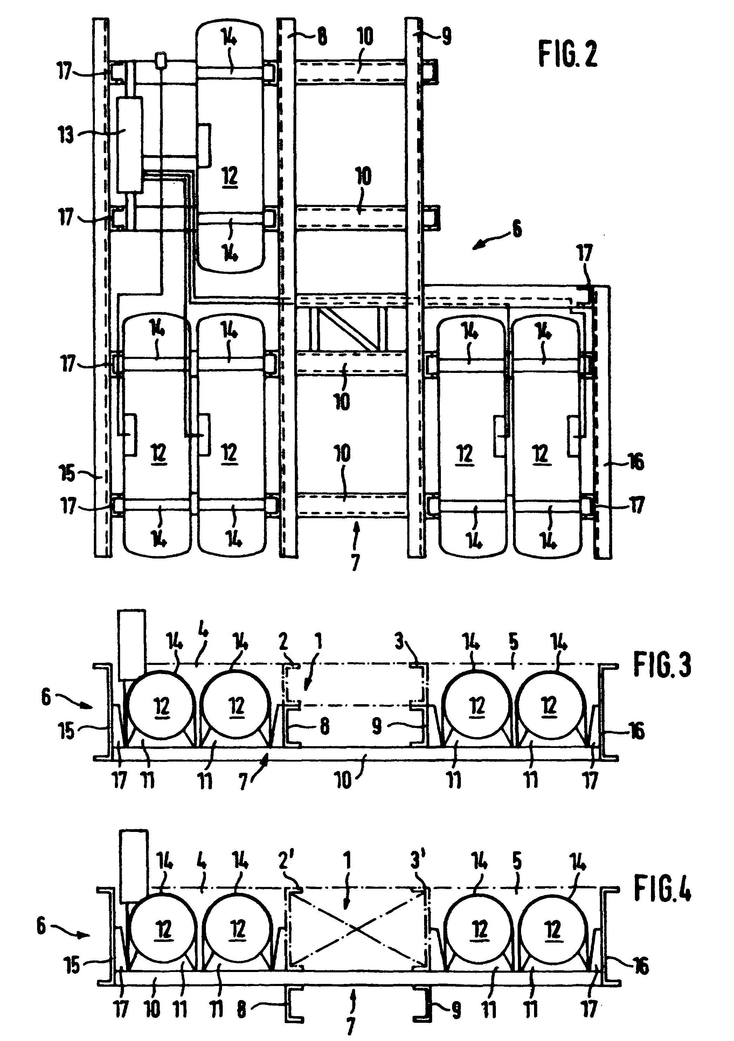

Im Fall des Ausführungsbeispiels gemäß Fig. 1 bis 3, dem ein Gasbus mit einem Leiterrahmen, der Längsträger 2, 3 vergleichsweise geringer Höhe aufweist, zugrunde liegt, sind die Querholme 10 des Traggestells 7 von unten her an den Längsholmen 8, 9 des Traggestells 7 befestigt, z. B. angeschweißt, angenietet oder angeschraubt. Die Längsholme 8, 9 sind parallel verlaufend in einen solchen Abstand voneinander angeordnet, dass sie bei Anbringung des Unterflureinbaumoduls 6 jeweils an einen Rahmen-Längsträger 2, 3 des Fahrzeugs zur Anlage kommen und dort befestigbar sind.

Im Fall des Ausführungsbeispiels gemäß Fig. 4, dem ein Gasbus mit einem Gitterrahmen, der Längsträger 2', 3' vergleichsweise großer Höhe aufweist, zugrunde liegt, sind die Querholme 10 des Traggestells 7 nicht unten, sondern oben an den Längsholmen 8, 9 aufgesetzt und dort befestigt, z. B. angeschweißt, angenietet oder angeschraubt.

Generell sind die Querholme 10 innerhalb des Traggestells 7 untereinander soweit beabstandet und im Wesentlichen parallel zueinander verlaufend angeordnet, dass die Gasbehälter 12 oder sonstigen Behälter ordnungsgemäß auflagerbar sind. Nach Anbau des Unterflureinbaumoduls 6 am Fahrzeug erstrecken sich die Querholme 10 des Traggestells 7 senkrecht stehend zur Fahrzeug-Längsachse.

Das Traggestell 7 ist an seinen Längsaußenseiten auch mit vorzugsweise austauschbaren Längsprofilholmen 15, 16 ausgestattet, für deren Abstützung und Befestigung an den fahrzeugaußenseitig zu liegen kommenden Enden der Querholme 10 des Traggestells 7 Halter 17 angeordnet sind. Diese nach Art von Rammschutzprofilen gestalteten Längsprofilholme 15, 16 bilden im Fahrzeug Seitenschutzplanken für den eingebauten Unterflureinbaumodul 6.

Im Fall des dargestellten Beispiels handelt es sich bei den Gasbehältern 12 um LPG-Kessel, die von einer Füllstation - Gerät 13 - her mit LPG betankbar sind. Im Fall von mit CNG betriebenen Bussen sind ähnliche Verhältnisse gegeben.

Nach Anbau des Unterflureinbaumoduls 6 am Fahrgestell-Rahmen des Omnibusses werden die modulinternen Anbauteile - Gasbehälter 12 und zugehörige Geräte 13 - mit den zugehörigen Systemen des Omnibusses verbunden.

## Patentansprüche

1. Gasbetriebener Omnibus, mit unterflurig an ihm angeordneten Gasbehältern (12) und mit einem Fahrgestell, dessen Rahmen (1) als tragende Organe zwei Längsträger (2, 2'; 3, 3') und des Weiteren Querspanten (4, 5) aufweist, **dadurch gekennzeichnet, dass** zur lagesicheren Unterbringung der Gasbehälter (12) im Omnibus ein Unterflureinbaumodul (6) vorgesehen ist, der ein Traggestell (7) aufweist, das aus zwei Längsholmen (8, 9) und wenigstens zwei, entweder unten oder oben an den Längsholmen (8, 9) befestigten Querholmen (10) zusammengesetzt ist, an deren fahrzeugaußenseitig zu liegen kommenden Enden Seitenschutzplanken bildende Längsprofilholme (15, 16) und oben die Gasbehälter (12) sowie zugehörige Geräte (13) lagesicher befestigt sind, wobei die Gasbehälter zwischen den Längsprofilholmen (15,16) und Längsträgern (2, 2', 3, 3') befestigt sind, dass dieser als komplett vormontierte Einheit mit auf Funktionstüchtigkeit seiner Anbauteile (12, 13) überprüfte Unterflureinbaumodul (6) von unten her am Fahrgestell-Rahmen (1) anbaubar ist, wobei die Längsholme (8, 9) des Traggestells (7) parallel in einem solchen Abstand zueinander verlaufend angeordnet sind, dass sie sich nach Anbau des Unterflureinbaumoduls (6) am Fahrgestell-Rahmen (1) jeweils unterhalb eines von dessen Rahmen-Längsträgern (2, 2'; 3, 3') verlaufend erstrecken.

2. Gasbetriebener Omnibus nach Anspruch 1, **dadurch gekennzeichnet, dass** für den Unterflureinbaumodul (6) zunächst das Traggestell (7) hergestellt wird, anschließend an diesem die Gasbehälter (12) und Geräte (13) montiert werden und dann die Funktionstüchtigkeit dieser Anbauteile (12, 13) überprüft wird.

3. Gasbetriebener Omnibus nach Anspruch 1, **dadurch gekennzeichnet, dass** dann, wenn dieser ein Fahrgestell mit einem Leiterrahmen mit Längsträgern (2, 3) vergleichsweise geringe Höhe hat, an dieses Fahrgestell ein Unterflureinbaumodul (6) angebaut ist, bei dessen Traggestell (7) die Querholme (10) unten an dessen Längsholmen (8, 9) befestigt sind und bei dessen Anbringung die sich parallel beabstandet zueinander verlaufenden Traggestell-Längsholme (8, 9) jeweils an einem Rahmen-Längsträger (2, 3) von unten her zur Anlage kommen und dann daran befestigbar sind.

4. Gasbetriebener Omnibus nach Anspruch 1, **dadurch gekennzeichnet, dass** dann, wenn dieser ein Fahrgestell mit einem Gitterrahmen mit Längsträgern (2', 3') mit vergleichsweise großer Höhe aufweist, an diesem Fahrgestell ein Unterflureinbaumodul (6) angebaut ist, bei dessen Traggestell (7) die Querholme (10) oben an dessen Längsholmen (8, 9) aufgesetzt und befestigt sind und bei dem nach seiner Anbringung sich die parallel beabstandet zueinander verlaufenden Traggestell-Längsholme (8, 9) jeweils unterhalb eines Rahmen-Längsträgers (2', 3') verlaufend erstrecken und die Querholme (10) unten an den Längsträgern (2', 3') anliegend befestigt sind.

5. Gasbetriebener Omnibus nach Anspruch 1, **dadurch gekennzeichnet, dass** nach Anbau des Unterflureinbaumoduls (6) am Fahrgestell-Rahmen (1) die Querholme (10) seines Traggestells (7) sich senkrecht stehend zur Fahrzeug-Längsachse erstrecken und untereinander beabstandet sowie im Wesentlichen parallel zueinander verlaufend angeordnet sind.

6. Gasbetriebener Omnibus nach Anspruch 1, **dadurch gekennzeichnet, dass** innerhalb des Unterflureinbaumoduls (6) auf den Querholmen (10) des Traggestells (7) Konsolen (11) angeordnet sind, auf denen die Gasbehälter (12) und zugehörigen Geräte (13) abgestützt und durch geeignete Mittel wie Spannbänder (14) und/oder Schraubverbindungen befestigt sind.

7. Gasbetriebener Omnibus nach Anspruch 1, **dadurch gekennzeichnet, dass** innerhalb des Unterflureinbaumoduls (6) an den fahrzeugaußenseitig zu liegen kommenden Enden der Querholme (10) des Traggestells (7) Halter (17) angeordnet sind, an denen ein eine Seitenschutzplanke für den eingebauten Unterflureinbaumodul (6) bildender Längsprofilholm (15, 16) austauschbar befestigt ist.

## Claims

1. Gas-powered bus with gas tanks (12) arranged underfloor and a chassis whose frame (1) has two longitudinal members (2, 2'; 3, 3') and also transverse spars (4, 5) as carrying organs, **characterised in that** for the fixed arrangement of the gas tanks (12) in the bus an underfloor installation module (6) is provided which has a carrier frame (7) composed of two longitudinal carriers (8, 9) and at least two transverse carriers (10) fastened to either the bottom or the top of said longitudinal carriers (8, 9), to the ends of which transverse carriers (10) longitudinal section carriers (15, 16) forming lateral guards and, on the top, gas tanks (12) and the associated devices (13) are firmly fastened, said ends being at the vehicle exterior, whereby the gas tanks are fastened between the longitudinal section carriers (15, 16) and longitudinal members (2, 2'; 3,3'), that this underfloor installation module (6) is a completely pre-assembled unit with add-on parts (12, 13) checked to ensure proper functioning and can be attached from below to the chassis frame (1), whereby the longitudinal carriers (8, 9) of the carrier frame (7) are arranged parallel to each other at a distance so that after attachment of the underfloor installation module (6) to the chassis frame (1) they each extend below one of the chassis frame longitudinal members (2, 2'; 3, 3').

2. Gas-powered bus according to Claim 1, **characterised in that** first a carrier frame (7) is manufactured for the underfloor installation module (6), to which frame (7) the gas tanks (12) and devices (13) are then fastened and the functioning of these add-on parts (12, 13) is subsequently checked.

3. Gas-powered bus according to Claim 1, **characterised in that** if said bus has a chassis with a ladder frame with longitudinal member (2, 3) with comparatively low height, an underfloor installation module (6) is attached to this chassis, in the carrier frame (7) of which underfloor installation module (6) the transverse carriers (10) are fastened to the bottom of the longitudinal carriers (8, 9) of said carrier frame (7) and that after said carrier frame (7) has been attached the longitudinal carriers (8, 9) of the carrier frame (7) run parallel to each other at a distance, contact each of the frame longitudinal members (2, 3) from below and can be fastened to said longitudinal members (2, 3).

4. Gas-powered bus according to Claim 1, **characterised in that** if said bus has a chassis with a lattice frame with longitudinal members (2', 3') with comparatively large height, an underfloor installation module (6) is attached to this chassis, to the carrier frame (7) of which underfloor installation module (6) the transverse carriers (10) are put on and fastened to the top end of the longitudinal carriers (8, 9) of said carrier frame (7) and that after said carrier frame (7) has been attached the longitudinal carriers (8, 9) of the carrier frame run parallel to each other at a distance below a frame longitudinal member (2', 3') and the transverse carriers (10) contact and are fastened to the underside of the frame longitudinal members (2', 3').

5. Gas-powered bus according to Claim 1, **characterised in that** after the underfloor installation module (6) has been attached to the chassis frame (1) the transverse carriers (10) of its carrier frame (7) extend perpendicular relative to the vehicle's longitudinal axis, are placed at a distance to each other and arranged basically parallel to each other.

6. Gas-powered bus according to Claim 1, **characterised in that** within the underfloor installation module (6) consoles (11) are arranged on the transverse carriers (10) of the carrier frame (7), on which consoles (11) the gas tanks (12) and associated devices (13) are supported and fastened by suitable means such as clamping straps (14) and/or bolted connections.

7. Gas-powered bus according to Claim 1, **characterised in that** within the underfloor installation module (6) brackets (17) are fitted to the ends of the transverse carriers (10) of the carrier frame (7), to which brackets (17) a longitudinal section carrier (15, 16) forming a lateral guard panel for the installed underfloor installation module (6) is exchangeably fastened, said ends being at the vehicle exterior.

## Revendications

1. Autobus fonctionnant au gaz, avec réservoirs à gaz (12) disposés sous le plancher et avec un châssis dont le cadre (1) présente deux longerons (2, 2' ; 3, 3') comme organes porteurs et, en outre, des cloisons transversales (4, 5), **caractérisé en ce qu'**il est prévu, pour loger en toute sécurité les réservoirs à gaz (12) dans l'autobus, un module de montage sous plancher (6) qui présente un cadre auxiliaire (7) composé de deux montants longitudinaux (8, 9) et d'au moins deux montants transversaux (10) fixés soit en dessous, soit au-dessus sur les montants longitudinaux (8, 9) et sur les extrémités desquels sont fixés côté extérieur du véhicule des montants profilés longitudinaux (15, 16) formant des barres de protection latérales et, au-dessus, les réservoirs à gaz (12) ainsi que les appareils qui en dépendent de manière sécurisée, auquel cas les réservoirs à gaz (12) sont fixés entre les montants profilés longitudinaux (15, 16) et les longerons (2, 2' ; 3, 3'), **en ce que** ce module de montage sous plancher (6), formé comme unité entièrement prémontée et dont la capacité de fonctionnement de ses pièces d'adaptation (12, 13) est vérifiée, peut être monté par le dessous sur le cadre du châssis (1), auquel cas les montants longitudinaux (8, 9) du cadre auxiliaire (7) sont disposés de manière ascendante et parallèle selon un tel écart les uns par rapport aux autres qu'ils s'étendent de manière ascendante, après le montage du module de montage sous plancher (6) sur le cadre de châssis (1), à chaque fois en dessous de l'un de ces longerons de cadre (2, 2' ; 3, 3').

2. Autobus fonctionnant au gaz selon la revendication 1, **caractérisé en ce que**, pour accueillir le module de montage sous plancher (6), le cadre auxiliaire (7) est tout d'abord fabriqué, puis les réservoirs à gaz (12) et les appareils (13) sont montés dessus et, enfin, la capacité de fonctionnement de ces pièces d'adaptation (12, 13) est vérifiée.

3. Autobus fonctionnant au gaz selon la revendication 1, **caractérisé en ce qu'**ensuite, lorsque celui-ci possède un châssis avec un cadre de type échelle avec des longerons (2, 3) d'une hauteur comparablement faible, un module de montage sous plancher (6) est monté sur ce châssis, les montants transversaux (10) étant, dans le cas du cadre auxiliaire (7) du module, fixés sur les montants longitudinaux (8, 9) et, lors du montage, les montants longitudinaux du cadre porteur (8, 9) étant disposés parallèlement et à une certaine distance les uns des autres, étant montés à chaque fois sur un longeron de cadre (2, 3) par le dessous, puis pouvant être fixés dessus.

4. Autobus fonctionnant au gaz selon la revendication 1, **caractérisé en ce qu'**ensuite, lorsque celui-ci présente un châssis avec un cadre de type échelle avec des longerons (2', 3') d'une hauteur comparablement élevée, un module de montage sous plancher (6) est monté sur ce châssis, les montants transversaux (10) étant, dans le cas du cadre porteur du module, posés et fixés dessus sur ses montants longitudinaux (8, 9) et, dans le cas duquel, les montants longitudinaux du cadre porteur (8, 9) disposés parallèlement et à une certaine distance les uns des autres s'étendant de manière ascendante à chaque fois en dessous d'un longeron de cadre (2', 3') et les montants longitudinaux (10) étant fixés de manière adjacente sur les longerons (2', 3').

5. Autobus fonctionnant au gaz selon la revendication 1, **caractérisé en ce qu'**après la pose du module de montage sous plancher (6) sur le cadre de châssis (1), les montants transversaux (10) de son châssis auxiliaire (7) s'étendent de manière verticale par rapport à l'axe longitudinal du véhicule et sont disposés à une certaine distance les uns en dessous des autres ainsi que de manière ascendante pour l'essentiel parallèlement les uns aux autres.

6. Autobus fonctionnant au gaz selon la revendication 1, **caractérisé en ce qu'**à l'intérieur du module de montage sous plancher (6), des consoles (11) sont disposées sur les montants transversaux (10) du cadre auxiliaire (7) et reçoivent en appui les réservoirs à gaz (12) et les appareils (13) fixés par le biais de moyens adéquats tels que des colliers de serrage (14) et/ou des liaisons boulonnées.

7. Autobus fonctionnant au gaz selon la revendication 1, **caractérisé en ce qu'**à l'intérieur du module de montage sous plancher (6), des supports sont disposés sur les extrémités côté extérieur du véhicule et ces supports reçoivent de manière interchangeable un montant profilé longitudinal (15, 16) formant une barre de protection latérale pour assurer la sécurité du module de montage sous plancher (6) monté.
